# EUROPEAN PATENT SPECIFICATION

(11) **EP 0 875 150 B1**
(45) Date of publication and mention of the grant of the patent: **04.06.2003**
(21) Application number: 98200816.1
(22) Date of filing: 16.03.1998
(51) Int. Cl.: A23C 9/154, A23F 5/24

(54) **Fat containing beverage**
Fett enthaltendes Getränk
Boisson contenant de la graisse

(30) Priority: 18.04.1997 US 844139
(43) Date of publication of application: 04.11.1998
(73) Proprietor: SOCIETE DES PRODUITS NESTLE S.A., 1800 Vevey (CH)
(72) Inventor: Vaghela, Mandasinh, Marysville, OH 43040 (US); Potter, Marianne Dorothy, Marysville, OH 43040 (US)

(56) References cited:
- EP-A- 0 403 825
- CA-A- 1 219 764
- US-A- 4 910 035
- US-A- 5 202 145
- PATENT ABSTRACTS OF JAPAN vol. 015, no. 256 (C-0845), 28 June 1991 & JP 03 083543 A (SAKAMOTO YAKUHIN KOGYO KK), 9 April 1991,
- PATENT ABSTRACTS OF JAPAN vol. 013, no. 595 (C-672), 27 December 1989 & JP 01 252273 A (SNOW BRAND MILK PROD CO LTD), 6 October 1989,

## Description

This invention relates to a liquid beverage, for example a ready-to-drink beverage, which contains fat and which is shelf stable. The invention also relates to a process of making the liquid beverage.

Flavoured liquid beverages, especially ready-to-drink beverages, which contain milk are available in several markets. An example of such a beverage is a whitened coffee drink in ready-to-drink form. Liquid beverages without any specific flavouring are also commercially available. Both beverage types may contain up to about 40% by weight of whole milk or about 5% by weight of milk solids. Milk fats constitute up to about 33% by weight of the milk solids and therefore these beverages may contain as much as about 1.5% by weight of milk fats. Beverages which are based upon non-dairy creamers contain similar levels of fat. These fats give rise to stability problems.

In particular, when stored for long periods of time, the fat rises to the surface of the beverage in the form of globules and forms an agglomerated, white layer. This is known as a cream layer and the phenomenon as creaming. Upon shaking of the container, the fat globules usually re-disperse within the beverage. However, a persistent, visible white ring usually remains on the container at the interface between the liquid beverage and the gas above it. Consumers usually find the presence of this ring unacceptable. Although the problem is not a major issue for beverages in cans since most consumers do not notice it, it is an issue for beverages in glass bottles. Further, the problem becomes more pronounced if the beverage is stored for more than 3 months; which is often the case.

An attempt to deal with certain stability problems in ready-to-drink beverages which contain milk, is disclosed in US patent 5,202,145. The beverage is produced by first mixing together water, milk and a stabiliser system made up of a combination of a monoglyceride and a carrageenan or pectin, or both, to provide a milk mixture. A buffered flavouring solution is then separately prepared from an acidic flavouring agent (for example, coffee), di-sodium phosphate and potassium bicarbonate. The buffered flavouring solution and the milk mixture are then mixed to provide a solution having a pH in the range of 6.8 to 7.2. The solution is then heated to thermally decompose substantially all of the potassium bicarbonate to potassium hydroxide and carbon dioxide. This process is described to provide a shelf stable beverage that has a pH of 6.3 to 6.5. However, this process is unnecessarily complicated and requires the use of a buffer system which is not universally approved by regulatory authorities.

JP 03 083543 A discloses a coffee drink comprising an extracted solution of coffee, a saccharide, de-fatted powdered milk, whole fat powder milk, hen's milk, etc., which is blended with 0.001-0.5% thickening type carrageenan (e.g. lambda type carrageenan) and 0.001-0.5% hydrophilic emulsifying agent (e.g. sucrose fatty acid ester).

The thickening type carrageenan and hydrophilic emulsifying agent are added to the coffee drink to prevent separation of milk protein and milk fat and to improve long-term shelf stability.

There is therefore a need for a system to stabilise fats in liquid beverages such that creaming and ring formation are minimised and which permits the use of various buffer systems and simple processing procedures.

Accordingly, in one aspect, this invention provides a thermally treated, liquid beverage comprising water; a whitener containing a fat; and a stabiliser system comprising a mixture of a monoglyceride emulsifier and lambda carrageenan for stabilising the fat.

The whitened beverage is surprisingly stable upon storage with reduced rate of creaming and no ring formation. Further, the beverage has substantially the same viscosity as conventional beverages and does not suffer from the disadvantage of sedimentation.

Preferably, the monoglyceride emulsifier comprises about 0.05% to about 0.25% by weight of the liquid beverage; for example 0.1% to about 0.2% by weight. The lambda carrageenan preferably comprises about 0.05% to about 0.15% by weight of the liquid beverage; for example about 0.05% to about 0.10% by weight.

The liquid beverage preferably includes a flavouring agent; for example soluble coffee solids.

In a further aspect, this invention provides a thermally treated, liquid beverage comprising water; a whitener containing a fat; and a stabiliser system for stabilising the fat, the stabiliser system consisting essentially of (i) about 0.05% to about 0.25% by weight of a monoglyceride emulsifier which includes up to 10% by weight of di-glycerides and up to 30% by weight of hydrogenated vegetable oils, and (ii) about 0.05% to about 0.15% by weight of lambda carrageenan.

In another aspect, this invention provides a method of preventing ring formation in a thermally treated, liquid beverage which contains water and a whitener containing a fat; the method comprising adding a stabiliser system comprising a mixture of a monoglyceride emulsifier and lambda carrageenan to the water and whitener; homogenising the mixture; and thermally treating the mixture.

Embodiments of the invention are now described by way of example only. The liquid beverage is in liquid form; for example in ready-to-drink form or liquid concentrate form. The liquid beverage and contains water, a whitener containing a fat, and a stabiliser system to minimise the formation of a cream layer on the beverage and hence a ring. Preferably the liquid beverage further whitened coffee beverages, whitened chocolate beverages, and whitened malted beverages.

The stabiliser system is made up of an emulsifier and a thickener. The emulsifier is a monoglyceride; that is a mono-ester of glycerol and a fatty acid. Preferably the fatty acid has from 10 to 20 carbon atoms; for example from 14 to 20 carbon atoms. The monoglyceride may be made up of a single fatty acid but preferably contains several different fatty acids. Commercially available monoglyceride emulsifiers usually contain small amounts of di-glycerides; for example up to about 10% by weight. Therefore the emulsifier system may contain small amounts of di-glycerides; usually less than about 8% by weight. Further, the emulsifier may contain hydrogenated vegetable oils; for example up to about 30% by weight of hydrogenated vegetable oils. Suitable monoglyceride emulsifiers are available under the trade names Myvatex® or Myverol®. A particularly suitable emulsifier is Myvatex® 8-06 which contains 79.9% by weight of monoglycerides and diglycerides (the diglyceride content being less than 8% by weight), and 20% by weight of hydrogenated soybean oil. This emulsifier has an acid value of less than 3, an iodine value of 24 to 30, a density of 930 kg/m³ at 80°C and a melting point of about 67°C.

For a beverage in ready-to-drink form, the emulsifier may comprise about 0.05% to about 0.25% by weight of the beverage; for example about 0.1% to about 0.2% by weight. For a beverage in the form of a concentrate, the emulsifier may comprise about 0.12% to about 1.25% by weight of the beverage.

The thickener is lambda carrageenan. Small amounts of other carrageenans may also be present since not all commercial sources of lambda carrageenan are completely pure. For a beverage in ready-to-drink form, the thickener may comprise about 0.05% to about 0.15% by weight of the beverage. For a beverage in the form of a concentrate, the thickener may comprise about 0.12% to about 1.0% by weight of the beverage.

The beverage may be produced by first preparing a liquid beverage mix. Usually the liquid beverage mix is made up of sugar or other sweetening agent, a flavouring agent, a whitener, the stabiliser system and a buffering system. The liquid beverage mix may be prepared by mixing together all dry ingredients, blending in the all liquid ingredients, and the subjecting the mixture to homogenisation. Usually, the whitener is added after the buffering system. Homogenisation may be carried out in two passes through a homogeniser; for example at about 15 to 30 MPa and then about 2 to 5 MPa. At this stage, the droplets of fat preferably have a size in the range of about 0.5 µm to 2 µm.

If a flavouring agent is used to prepare the liquid beverage mix, it may be coffee, cocoa, chocolate mixes, malted cereals, etc. The flavouring agent may be liquid or solid; for example coffee powder or coffee extract for a coffee drink. If coffee is used as the flavouring agent for a beverage in ready-to-drink form, the liquid beverage conveniently contains about 0.5% to about 2% by weight of soluble coffee solids; for example 0.75% to about 1.5% by weight.

The buffering system may be any suitable buffering system. For example, the buffering system may include sodium and potassium bicarbonate, di-sodium and di-potassium phosphates, and sodium and potassium citrates. Various combinations of these buffers may also be used. The purpose of the buffering solution is to buffer the pH to stabilise proteins in the beverage; for example to a pH in the range of about 6.3 to about 7.2. Apart from the need to provide a pH which stabilises proteins, the buffering system selected will depend largely upon regulations in the various countries and desired organoleptic properties. Typically, the total amount of the buffering system used is in the range of about 0.05% to about 1.5% by weight of the beverage; for example about 0.1% to about 0.3% by weight.

The whitener used may be any suitable whitener; dairy or non dairy-based. Suitable dairy based whiteners are whole or skimmed milk, mixtures of non fat milk solids with milk fats, and mixtures of all of these. Suitable non-dairy whiteners are coffee or tea creamers; for example creamers which contain about 35 to 50% by weight of fat (for example coconut fat), about 25 to 40% by weight of a sweetener (for example corn syrups), about 3 to 10% of a protein (for example a milk based protein such as sodium caseinate), and emulsifiers, stabilisers and buffers.

If milk or milk solids are used as the whitener in the beverage mix, the amount of milk or milk solids may be varied as desired to obtain a desired appearance and flavour. If whole milk is used, the amount of milk included in the beverage product is usually about 5% to about 40% by weight. If milk solids are used, the amount included in the beverage is usually about 1% to about 5% by weight. The milk solids include milk fat.

After, homogenisation, the liquid beverage is conveniently cooled to about 4°C to about 20°C and filled into containers such as bottles or cans. The containers are then sealed and subjected to retorting to sterilise the beverages. The retorting may be carried out in a batch retort using hot water or steam or may be carried out in a continuous fashion using a hydrostatic retort or a spiral continuous cooker; for example. The retort is preferably carried out at a temperature of about 110°C to about 125°C and for a time sufficient to achieve an Fₒ value of about 3 to about 30; for example about 4 to about 10. The Fₒ value is the equivalent time in minutes that the beverage is held at a temperature of 121°C. The liquid beverage is then cooled and stored.

The liquid beverage is shelf stable in that it may be stored for a period of at least nine months up to temperatures of about 30°C. Further, the liquid beverage has reduced tendency to form a cream layer and hence little or no ring formation occurs on the insides of the container. The flavour profile of the beverage also remains stable with little or no tendency to produce off flavours.

For liquid beverages which contain whole milk, the beverage typically has the following components:

| **Component** | **Amount (% by weight)** |
|---|---|
| Water | 50 to 70 |
| Whole milk | 5 to 40 |
| Sugar | 3 to 7 |
| Soluble Coffee solids | 0.75 to 1.5 |
| Monoglycerides | 0.05 to 0.25 |
| λ-carrageenan | 0.05 to 0.15 |
| Buffer salts | 0.05 to 0.3 |

Instead of producing the liquid beverage mix as described above, the two stage procedure described in US patent 5,202,145 may be used. In this case, the water, milk and stabiliser system are mixed to provide a milk mixture. The flavouring agent and buffering system are the mixed together to provide a buffered flavouring solution. The buffered flavouring solution and the milk mixture are then mixed and homogenised. The homogenised mixture may then be filled into containers and thermally treated as described above.

As a further example of a modification, the homogenised liquid beverage may be subjected to ultra high temperature processing as described in US patent 4,980,182. In this case, the homogenised liquid beverage is heated to a temperature of about 135°C to about 155°C for 2 to 30 seconds. Then, the thermally treated liquid beverage is aseptically filled into containers. Further retorting or thermal treatment of the liquid beverage is then not necessary.

### Example 1

Disodium phosphate and potassium bicarbonate are added to water at a temperature of about 65°C. Myvatex® 8-06 is then added to the buffer solution and blended in well. A mixture of lambda carrageenan and sugar is then blended in. Coffee powder and more sugar is then added and the solution mixed. The solution has a pH of about 6.8 to 6.9.

Whole milk is then added to the solution and mixed in well. The liquid beverage is then heated to about 75°C to about 80°C and homogenised in a two-stage homogeniser at about 30 MPa and 3.5 MPa respectively. The homogenised mixture is then cooled and filled into bottles. The bottles are then retorted to an Fₒ value of about 5. The bottles are then stored at room temperature and at about 4°C for up to nine months.

The components of the beverage in the bottles are as follows:

| Component | Percentage by Weight |
|---|---|
| Water | 63.4 |
| Whole milk (3.3% milk fat) | 30 |
| Sugar | 5 |
| Soluble coffee | 1.1 |
| Monoglyceride s | 0.2 |
| λ carrageenan | 0.1 |
| Buffer salts | 0.2 |

The bottles are examined during storage for the formation of sediments, creaming, ring formation, viscosity, and particle size. No sedimentation is detected and viscosity and particle size are acceptable. Further, for the bottles stored at 4°C, no creaming or ring formation is detected. For the bottles stored at room temperature, the creaming rate is significantly reduced and no ring formation occurs.

The bottles are opened and tested by a tasting panel. The flavour of the beverage is good with little or no off notes.

### Example 2 - Comparison

The procedure of example 1 is repeated except that various emulsifiers and thickeners are used in place of monoglycerides and lambda carrageenan.

| **Sample** | **Stabiliser system** | **Comments** |
|---|---|---|
| A | Monoglycerides | Creaming noticeable |
| B | Distilled monoglycerides, Diacetyl tartaric acid esters of mono-diglycerides | Creaming noticeable, ring formation |
| C | Lecithin | Creaming noticeable, ring formation |
| D | Monoglycerides, Lecithin | Creaming noticeable, ring formation |
| E | κ- and λ- carrageenan | Product gelled and coagulated |
| F | iota- and κ-carrageenan | sediments and flocculation noticeable, phases have separated |
| G | Propylene glycol alginate | Creaming and sedimentation noticeable |
| H | Gum arabic | Product coagulated |
| I | Monoglycerides, κ carrageenan | Creaming noticeable, ring formation |

None of the products are acceptable.

### Example 3

The procedure of example 1 is repeated except that the buffer system used is sodium bicarbonate and potassium citrate. No sedimentation is detected and viscosity and particle size are acceptable. Further, for the bottles stored at 4°C, no creaming or ring formation is detected. For the bottles stored at room temperature, the creaming rate is significantly reduced and no ring formation occurs.

## Claims

1. A thermally treated, liquid beverage comprising water; a whitener containing a fat; and a stabiliser system comprising a mixture of a monoglyceride emulsifier and lambda carrageenan for stabilising the fat.

2. A beverage according to claim 1 in which the stabiliser system comprises 0.05% to 0.25% by weight of the monoglyceride emulsifier and 0.05% to 0.15% by weight of the lambda carrageenan.

3. A beverage according to claim 2 in which the stabiliser system comprises 0.1% to 0.2% by weight of the monoglyceride emulsifier and 0.05% to 0.1% by weight of the lambda carrageenan.

4. A beverage according to any of claims 1 to 3 further comprising a flavouring agent.

5. A beverage according to claim 4 in which the flavouring agent is soluble coffee solids.

6. A beverage according to any of claims 1 to 5 in which the whitener is milk or milk solids.

7. A beverage according to any of claims 1 to 6 further comprising 0.05% to 0.3% by weight of the beverage of buffer salts selected from one or more of sodium and potassium bicarbonate, di-sodium and di-potassium phosphates, and sodium and potassium citrates.

8. A beverage according to any of claims 1 to 7 in which the monoglyceride emulsifier includes up to 10% by weight of di-glycerides and up to 30% by weight of hydrogenated vegetable oils.

9. A beverage according to claim 8 in which the monoglyceride emulsifier includes up to 8% by weight of di-glycerides, and up to 20% by weight of hydrogenated vegetable oils.

10. A method of preventing ring formation in a thermally treated, liquid beverage which contains water and a whitener containing a fat; the method comprising adding a stabiliser system comprising a mixture of a monoglyceride emulsifier and lambda carrageenan to the water and whitener; homogenising the mixture; and thermally treating the mixture.

## Patentansprüche

1. Thermisch behandeltes flüssiges Getränk, das Wasser, einen ein Fett enthaltenden Weißer und ein Stabilisatorsystem zur Stabilisierung des Fetts umfaßt, das eine Mischung eines Monoglyceridemulgators und von λ-Carrageenan umfaßt.

2. Getränk nach Anspruch 1, bei dem das Stabilisatorsystem 0,05 bis 0,25 Gew.-% Monoglyceridemulgator und 0,05 bis 0,15 Gew.-% des λ-Carrageenans umfaßt.

3. Getränk nach Anspruch 2, bei dem das Stabilisatorsystem 0,1 bis 0,2 Gew.-% des Monoglyceridemulgators und 0,05 bis 0,1 Gew.-.% des λ-Carrageenans umfaßt.

4. Getränk nach irgendeinem der Ansprüche 1 bis 3, das außerdem ein Aromatisierungsmittel umfaßt.

5. Getränk nach Anspruch 4, bei dem das Aromatisierungsmittel lösliche Kaffeefeststoffe sind.

6. Getränk nach irgendeinem der Ansprüche 1 bis 5, bei dem der Weißer Milch oder Milchfeststoffe sind.

7. Getränk nach irgendeinem der Ansprüche 1 bis 6, das außerdem 0,05 bis 0,3 Gew.-% des Getränks an Puffersalzen enthält, die ausgewählt sind aus einem oder mehreren von Natrium- und Kaliumbicarbonat, Dinatrium- und Dikaliumphosphaten und Natrium- und Kaliumcitraten.

8. Getränk nach irgendeinem der Ansprüche 1 bis 7, bei dem der Monoglyceridemulgator bis zu 10 Gew.-% Diglyceride und bis zu 30 Gew.-% hydrierte Pflanzenöle enthält.

9. Getränk nach Anspruch 8, bei dem der Monoglyceridemulgator bis zu 8 Gew.-% Diglyceride und bis zu 20 Gew.-% hydrierte Pflanzenöle enthält.

10. Verfahren zur Verhinderung der Ringbildung bei einem thermisch behandelten flüssigen Getränk, das Wasser und einen ein Fett enthaltenden Weißer enthält, wobei das Verfahren die Zugabe eines Stabilisatorsystems, das eine Mischung aus einem Monoglyceridemulgator und λ-Carrageenan umfaßt, zu dem Wasser und dem Weißer, das Homogenisieren der Mischung und die thermische Behandlung der Mischung umfaßt.

## Revendications

1. Boisson liquide, ayant subi un traitement thermique, comprenant de l'eau ; un agent de blanchiment contenant une matière grasse ; et un système stabilisant comprenant un mélange d'un émulsionnant consistant en monoglycéride et de lambda-carraghénine pour stabiliser la matière grasse.

2. Boisson suivant la revendication 1, dans laquelle le système stabilisant comprend 0,05 % à 0,25 % en poids de l'émulsionnant consistant en monoglycéride et 0,05 % à 0,15 % en poids de la lambda-carraghénine.

3. Boisson suivant la revendication 2, dans laquelle le système stabilisant comprend 0,1 % à 0,2 % en poids de l'émulsionnant consistant en monoglycéride et 0,05 % à 0,1 % en poids de la lambda-carraghénine.

4. Boisson suivant l'une quelconque des revendications 1 à 3, comprenant en outre un agent aromatisant.

5. Boisson suivant la revendication 4, dans laquelle l'agent aromatisant consiste en matière sèche de café soluble.

6. Boisson suivant l'une quelconque des revendications 1 à 5, dans laquelle l'agent de blanchiment consiste en lait ou matière sèche de lait.

7. Boisson suivant l'une quelconque des revendications 1 à 6, comprenant en outre 0,05 % à 0,3 % en poids de la boisson de sels tampons choisis entre un ou plusieurs des sels consistant en bicarbonate de sodium et bicarbonate de potassium, phosphate disodique et phosphate dipotassique et citrate de sodium et citrate de potassium.

8. Boisson suivant l'une quelconque des revendications 1 à 7, dans laquelle l'émulsionnant consistant en monoglycéride comprend jusqu'à 10 % en poids de diglycérides et jusqu'à 30 % en poids d'huiles végétales hydrogénées.

9. Boisson suivant la revendication 8, dans laquelle l'émulsionnant consistant en monoglycéride comprend jusqu'à 8 % en poids de diglycérides, et jusqu'à 20 % en poids d'huiles végétales hydrogénées.

10. Procédé pour empêcher la formation d'une auréole dans une boisson liquide, ayant subi un traitement thermique, qui contient de l'eau et un agent de blanchiment contenant une matière grasse, procédé qui comprend l'addition d'un système stabilisant comprenant un mélange d'un émulsionnant consistant en monoglycéride et de lambda-carraghénine à l'eau et l'agent de blanchiment, l'homogénéisation du mélange et le traitement thermique du mélange.
